Europäisches Patentamt

European Patent Office

Office européen des brevets

(19)

(11) Publication number: **0 035 978**
A2

(12) # EUROPEAN PATENT APPLICATION

(21) Application number: **81830035.2**

(22) Date of filing: **06.03.81**

(51) Int. Cl.³: **A 21 D 13/06**
**A 21 D 13/04, A 21 D 2/18**
**A 21 D 2/36**

(30) Priority: **07.03.80 IT 4810180**

(43) Date of publication of application:
**16.09.81 Bulletin 81/37**

(84) Designated Contracting States:
**AT BE CH DE FR GB LI LU NL SE**

(71) Applicant: Sidoti, Filippo
36, Via Vecchia Comunale
I-98013 Messina(IT)

(72) Inventor: Sidoti, Filippo
36, Via Vecchia Comunale
I-98013 Messina(IT)

(74) Representative: Tonon, Gilberto et al,
c/o Società Italiana Brevetti Piazza Poli 42
I-00187 Roma(IT)

(54) Process for obtaining baking products, and products thereby obtained.

(57) A baking process, wherein through use of amylaceous or starchy products, absolutely free from wheat, barley, oat and rye gluten, that is through use of amylaceous or starchy substances deriving in particular from rice, maize, soy bean and potatoes, products are obtained of the type of bread, bread sticks and the like, absolutely free from gluten which is harmful to the health of people suffering from coelical disease or nephrosis. Products obtained through such process.

EP 0 035 978 A2

Croydon Printing Company Ltd.

FILIPPO SIDOTI

Process for obtaining baking products,
and products thereby obtained.

This invention refers to a process for obtaining new
baking products, of the type of bread, bread sticks,
rusks and the like, as well as products obtained through
such process.

As it is well known the ingestion of gluten is harmful
to people suffering from nephrosis or coelical disease.

Therefore all those who cannot take in gluten without
suffering damages to their health, cannot use, without
suffering from such damages, the usual baking products,
such as bread, bread sticks etc., which contain amylaceous
or starchy substances deriving from wheat, barley, oat
and rye,that is containing gluten which is harmful to
the above mentioned people.

In order to obtain baking products not containing said
harmful  gluten, amylaceous and starchy substances should
be therefore used not deriving from wheat, barley, oat and rye, but on the other hand deriving from rice, maize, or corn, soy bean, potatoes and all those other edible amylaceous or starchy substances in the chemical composition of which said harmful gluten does not appear.

Baking absolutely without wheat, barley, rye and oat gluten will however involve serious drawbacks due to the fact that amylaceous or starchy substances free from harmful gluten, in the mixing phase which is necessary in order to obtain the desired baking, imply several difficulties concerning:

an insufficient tie (due to the absence of said gluten, which, if on one hand would have the already mentioned harmful effect, on the other hand is a protein having particular glueing characteristics);

the consequent inelasticity (incapacity that is to let itself be formed);

the scarce capability of withholding when not baked the indispensable quantity of water in the cooking and leavening phases.

The object therefore of this invention is that to achieve a process for obtaining baking products harmless to the above mentioned people, avoiding at the same time the difficulties and drawbacks illustrated.

The process according to the present invention allows in fact to obtain, thanks to the particular operative cycle and to the particular percentages of the ingredients, conditions which are equal to those which are obtained starting from a flour which is rich in gluten, allowing therefore an easy mixture and an excellent leavening.

The process according to the present invention is characterized substantially by the fact that it comprises the operations of: dry mixing the potato flour and saccharose; adding to the mixture so obtained whole cow milk, in order to form a solution/suspension; very slowly applying heat to said solution/suspension, still mixing to the end of obtaining a homogeneity as great as possible, till the solution/suspension thickens; allowing the thickened composition to cool down; pouring said composition, edible animal fat and possibly salt, within a first part of the composition under the form of flour, formed by an amylaceous or starchy product, free from wheat, barley, oat and rye gluten and begin to mix the whole; adding yeast (saccharomycetes cultivated on non proteic ground) diluted in water, pouring gradually into the dough which has created, and gradually adding a second part of said composition under the form of flour, continuing to mix so that the dough results as homogeneous as possible; and eventually performing the further usual operations, such as shaping, leavening, extruding, cooking, etc., in order to obtain the desired finished product.

Said amylaceous or starchy product may be formed by flour or starch of maize, potato flour, flour or starch of rice, flour or starch of soy bean, or by any whatsoever mixture thereof. According to a characteristic of said process, potato flour, saccharose and whole cow milk, mentioned in the first two operation of the process itself, are in proportions of weight of about 4:5:36.

A specific example of embodiment will be described hereinafter of the present process, apt to produce bread absolutely free from said harmful gluten.

Ingredients:
- 300 g of amylaceous mixture formed by maize starch (50%) and of potato flour (50%);
- potato flour (20 g);
- saccharose (25 g);
- whole cow milk (180 g);
- lard (40 g);
- yeast (saccharomycetes cultivated on non proteic ground) (25 g);
- water (50 g);
- salt (sodium chloride) as required.

Starting from such ingredients the process involves the following operations:
1) dry mixing the 25 g of saccharose with the 20 g of potato flour;
2) adding to the mixture so obtained the 180 g of milk, in order to form a solution/suspension;
3) very slowly adding heat (final temperature 100÷110°C) to said solution/suspension, still mixing to the end of obtaining a homogeneity as great as possible, till the solution/suspension thickens;
4) allowing the thickened composition to cool off (up to about 35°C);

5) pouring said composition, as well as the 40 g of lard
and possibly salt, into about 50% of said 300 g of
amylaceous mixture, and beginning to mix;

6) adding 25 g of diluted yeast into the 50 g of tepid
water, pouring it gradually into the dough which
has developped, and gradually adding the remaining 50%
of the said 300 g of amylaceous mixture, continuing
to mix so that the dough results as homogeneous as
possible;

7) forming the dough according to the desired shapes, placing it
to leaven in an airy ambient and in optimum temperature conditions (25-30°C);

8) after the necessary leavning time has passed (about
1 hour), placing in an oven to cook at a temperature
of 220÷250°C.

By means of the process according to the present invention, by varying appropriately the mixture of flours
or starches, the proportions of certain ingredients as
well as the final operations of the type of forming,
leavening, extruding, cooking, etc., a wide variety of
food products is obtained such as bread, bread sticks,
rusks, etc., all characterized by the absolute absence
of wheat, barley, oat and rye gluten, and therefore
completely harmless for the people mentioned at the
beginning.

It is obvious that many and different variations may be
brought by the experts in the art to the illustrated
form of embodiment of the present invention, without
departing from its scope. It is intended that such
variations and modifications all fall within the field
of the invention itself.

0035978

Claims:

1. A process for obtaining baking products characterized by the fact that it comprises the operations of: dry mixing potato flour and saccharose; adding to the mixture so obtained whole cow milk, so as to form a solution/suspension; adding heat very slowly to said solution/suspension, still mixing to the end of obtaining a homogeneity as great as possible, till the solution/suspension thickens; allowing the thickened coposition to cool off; pouring said composition, edible animal fat and possibly salt, within a first part of a composition under the form of flour, formed by an amylaceous or starchy product, free from gluten of wheat, barley, oat and rye, and beginning to mix the whole; adding starch diluted in water, pouring it gradually into the dough which has developped, and adding gradually a second part of said composition under the form of flour, continuing to mix so that the dough results as homogeneous as possible; and performing the further usual operations, such as shaping, leavening, extruding, cooking, etc., in order to obtain the desired finished product.

2. The process according to claim 1 characterized by the fact that said composition under the form of flour is formed by flour of maize starch, potato flour, flour or starch of rice, flour or starch of soy bean, or similar products or any mixture thereof.

3. The process according to claim 1 or 2, characterized by the fact that said first part and said second part of said composition under the form of flour are in the proportion of weight of about 1:1.

4. The process according to any of the preceding claims, wherein said compositions of potato flour, saccharose and whole cow milk, mentioned in the first two operations of the process, are in the proportions of weight of about 4:5:36.

5. The product under the form of bread, bread sticks, rusks and the like, absolutely free from gluten of wheat, barley, oat and rye, obtained through the process according to any of the preceding claims.